# EUROPEAN PATENT SPECIFICATION

(11) **EP 4 016 182 B1**
(45) Date of publication and mention of the grant of the patent: **23.07.2025**
(21) Application number: 21215916.4
(22) Date of filing: 20.12.2021
(51) Int. Cl.: G03B 11/04, G06F 1/16, H04M 1/02, G03B 30/00

(54) **ELECTRICALLY CONTROLLED PRIVACY SHUTTER**
ELEKTRISCH GESTEUERTER SICHTSCHUTZ OBJEKTIVVERSCHLUSS
OBTURATEUR DE CONFIDENTIALITÉ COMMANDÉ ÉLECTRIQUEMENT

(30) Priority: 21.12.2020 US 202017129694
(43) Date of publication of application: 22.06.2022
(73) Proprietor: Lenovo (Singapore) Pte. Ltd., New Tech Park 556741 (SG)
(72) Inventor: LI, Scott Wentao, CARY, NC (US); KAPINOS, Robert, DURHAM, NC (US); NORTON, Robert, RALEIGH, NC (US); VANBLON, Russell Speight, RALEIGH, NC (US)
(74) Representative: Openshaw & Co.

(56) References cited:
- US-A1- 2011 076 005
- US-A1- 2013 232 238
- US-A1- 2018 160 020
- US-B2- 10 331 260

## Description

### BACKGROUND

Electronic devices with cameras and wireless or wired communication capabilities are capable of transmitting views of a user without the user intending to transmit such views. To minimize the chances of such unintended transitions, user have resorted to placing objects over camera lenses to prevent the capture and hence transmission of images. Some of the objects used include opaque mechanical structures, such as sliding shutters. The sliding shutters allow the user to physically slide the shutter within a shutter frame attached to the electronic device. The shutter frame is attached to the device in a position to cover the camera lens with the shutter in a closed position, and to expose the camera lens with the shutter in an open position. The user must physical slide the shutter and remember to close the shutter following intended use of the camera.

US 10331260 B2 describes sensors and other components that can be disposed beneath a variable transparency layer of a mobile device. By modifying how much voltage is applied to the variable transparency layer, a component, such as a camera, can be readily hidden when not in use.

### SUMMARY

A device includes a shutter configured to block light transmission in a first state and permit light transmission in a second state in response to a sufficient voltage being applied across the shutter. The shutter is supported over a camera lens of a device. A controller is coupled to the shutter to selectively apply the voltage. The controller comprises a timer settable to a time during which the voltage is applied.

### BRIEF DESCRIPTION OF THE DRAWINGS

FIG. 1 is a block diagram of an electronic device having a camera with a lens and a shutter coupled to cover the camera lens according to an example embodiment.
FIG. 2 is a block schematic representation of a shutter according to an example embodiment.
FIG. 3 is a block diagram illustrating an alternative shutter according to an example embodiment.
FIG. 4 is a block diagram of an integrated shutter system according to an example embodiment.
FIG. 5 is a block diagram of an alternative shutter system according to an example embodiment.
FIG. 6 is flowchart illustrating a method of controlling a shutter according to an example embodiment.
FIG. 7 is a block schematic diagram of a computer system to implement one or more example embodiments.

### DETAILED DESCRIPTION

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

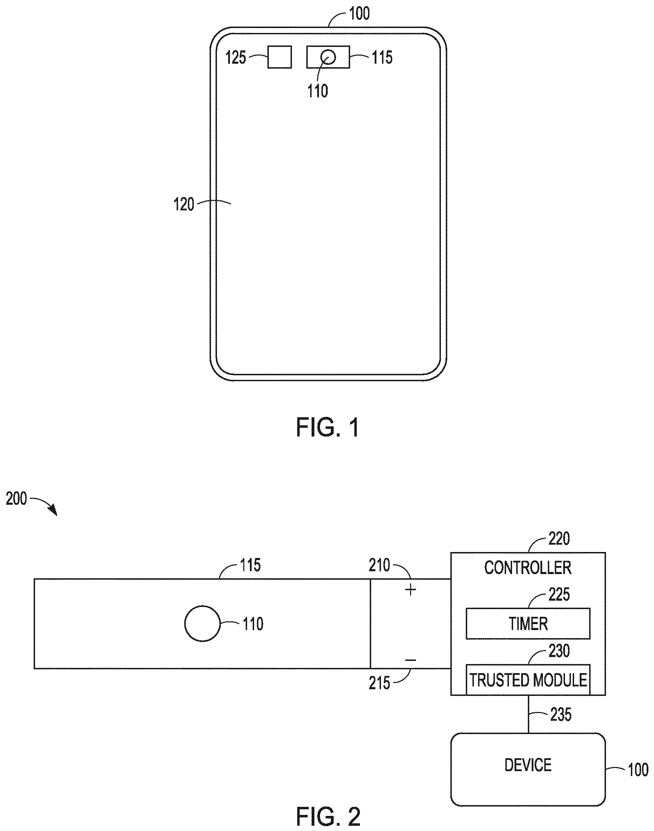

FIG. 1 is a block diagram of an electronic device 100 having a camera with a lens 110 and a shutter 115 coupled to cover the camera lens 115. The shutter 115 may be formed with a layer that is normally opaque such that the shutter blocks light transmission to the lens 115. The shutter changes to substantially transparent to permit light transmission to the lens 110 in response to a suitable voltage being applied across the shutter 115. The shutter 115 and layer may be formed as a plate having sufficient area to cover or sufficiently obscure the camera lens 115 while voltage is applied. Device 100 may be a smart phone, a tablet, a laptop computer, a camera coupleable to a computer, or other device for which a user of the device may wish to ensure controllable privacy.

The terms opaque and transparent may be interpreted to a means that no light, or very little light preventing images from being discerned, or all light or a significant amount of light from which images may be discerned respectively. In further embodiments, the amount of light blocked may simply be different to varying degrees depending on whether voltage is applied, or not applied. In still further embodiments, varying amounts of voltage may be applied as desired to modify the amount of light blocked or transmitted.

In one embodiment, the shutter 115 is formed from with a polymer dispersed liquid crystal that is thin and can easily be applied to or incorporated into a display screen 120, such as a touch screen of the device 100. Various means for supporting the shutter 115 over the camera lens 115 of device 100 include a suitable transparent adhesive applied to the shutter 115 to adhere it to the screen 120, which may be formed of glass. Other means include forming various layers of the shutter 115 directly on the screen 120. Further means include utilizing a frame to hold the shutter and attaching the frame to the screen 120. Still further means may be used to secure the shutter over one or more camera lenses in further embodiments. The shutter may be coupled to a device bus for receiving power. The device bus may also provide signals to control the shutter as discussed in further detail below.

Device 100 may further include a vibration sensing device 125 to operate as a switch to control the state of the shutter as described in further detail below.

FIG. 2 is a block schematic representation of shutter 115 illustrating electrical connections to further electronics generally at 200. Shutter 115 is coupled via positive and negative conductors 210 and 215 to a controller 220. The controller 220 is coupled to the shutter 115 to selectively apply voltage via conductors 210 and 215 to cause the shutter 115 to turn opaque.

Controller 220 includes a timer 225 that is settable to a time during which the voltage is applied. The time may be preselected, such as 60 minutes, or may be specified by a user of the device 100. In one example, a signal may be provided via communication line 235 to the controller via a trusted privacy module 230. Communication line 235 is also representative of a receiver or transceiver for receiving wireless control signals from device 100 or other device, such as a remote control, wireless keyboard, mouse, or other device.

In some examples the signal may be generated based on a meeting on a user's calendar, with the signal specifying the length of the meeting for use in setting the timer 225. The user may be provided an option of whether or not to send the signal in response to the meeting starting or about to start. The option may be tied into a video conferencing application like Zoom^{®} or Teams^{®} message asking whether or not video is desired for the meeting.

The trusted privacy module 230 may be configured to receive the input signal from a remote source requesting application of the voltage. The trusted privacy module 230 may then verify the source of the input signal. Public/private key encryption may be used for verification. Thus the input signal may include a public key that allowed decrypting the signal by use of the private key to verify that the signal originated from a trusted source, such as device 100, or other authorized device.

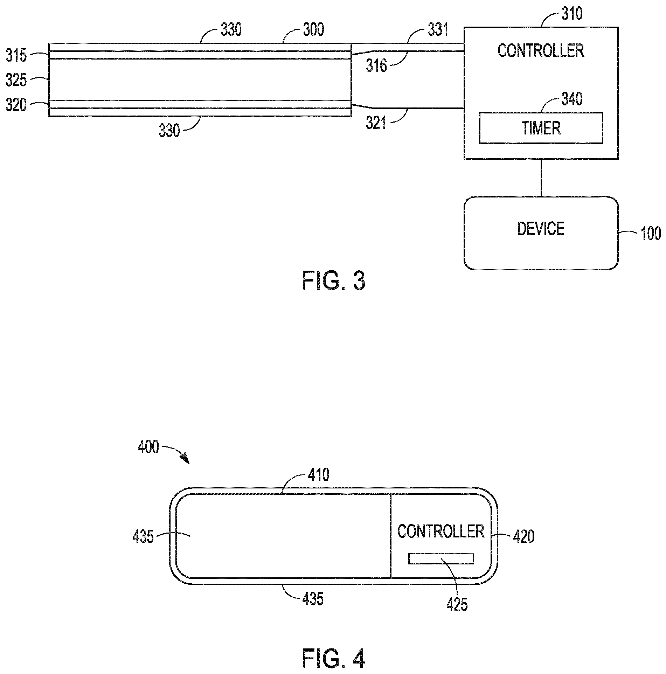

FIG. 3 is a block diagram illustrating an alternative shutter 300 coupled to a controller 310. Shutter 300 is represented in cross section to illustrate various layers. A first conductive layer 315, such as a plate, is coupled to the controller 310 via a first voltage conductor 316. A second conductive layer 320, such as a plate, is coupled to the controller 310 via a second voltage conductor 321. A polymer dispersed liquid crystal (PDLC) layer 325 is dispersed between the first and second conductive layers 315 and 320 such that when voltage is applied by the controller 310 across the first and second voltage conductors 316 and 321, the layer 325 becomes substantially opaque.

The polymer dispersed liquid crystal layer 325 consists of microdroplets of liquid crystals encapsulated in a polymer matrix. The liquid crystals respond to an electrical charge. In a static state, the liquid crystal molecules remain in a randomized configuration that refracts light that enters the layer, making it appear opaque. In response to an electric field, the molecules line up with the direction of the electric field, allowing light to pass through the layer as the layer is now transparent. When the electric field or electric charge is removed, the molecules or droplets again become randomly oriented. The incoming light is heavily scattered and does not pass through the layer, resulting in a fully or at least partially blocked image.

Shutter 300 may also include a transparent touch sensitive layer 330 that is coupled to the controller via conductor 331. The touch sensitive layer 330 may include capacitive sensors that change in capacitance in response to an object, such as a finger or other conductive object comes near or into contact with layer 330. The conductor 331 may include multiple conductors coupled to the capacitive sensors to facilitate sensing. Touch sensitive layer 330 may thus operate as a switch that is activatable by a user to cause application of the voltage via conductors 316 and 321 to cause the controller 310 to switch on the voltage to turn layer 325 transparent. If touched again, the voltage may be removed, turning layer 325 opaque.

Alternatively, the switch can be the vibration sensing device 125, such as a hall effect sensor or nano-wire vibration sensor that is responsive to a knock or user strike proximate or sufficiently close to the sensing device 125 such that vibrations created by the knock or strike can be detected such that a signal responsive to the knock or strike is provided to the controller 310. Still further, a microphone may be used to detect sound associated with knocks. The microphone may be already built into device 100 to provide signals to the controller 310. The sensing device 125 may be located proximate, such as close to or nearby the shutter as shown in FIG. 1, or anywhere else desired.

Layer 330 thus operates as a user activated switch. Other forms of user activated switches may be used in further embodiments, such as button switches, motion sensors, or other types of switches.

In some examples, various touches or sequences of touches may be used to program a controller 310 timer 340. For instance, one tap or knock on layer 330 may set time 340 for 60 minutes, resulting in voltage being applied across layer 325 for one hour. Two taps may cause different control actions based on the current state of control. If no voltage is being applied, two taps may cause the voltage to be applied. Two more taps may then disable the voltage, returning layer 325 to the opaque state. In another embodiment, if no voltage is being applied, a number of taps in somewhat rapid succession may increment the timer 340 by 15 minutes for each tap in succession. Rapid succession may be interpreted as taps within at least 0.5 to 1.5 seconds in one embodiment. The time between taps corresponding to rapid succession may be set by a user in further embodiments. Still further, following the rapid taps, a single tap may be used to return the layer 325 to opaque by removing the voltage.

In one example, shutter 300 may include a transparent adhesive layer 350 suitable for attaching the shutter 300 to screen 120 to cover lens 115. In still further embodiments, the layers of shutter 300 may be formed directly on the screen 120.

FIG. 4 is a block diagram of an integrated shutter system 400. Integrated shutter system 400 includes a shutter 410 coupled to a controller 420 for controlling the shutter 410 between opaque and transparent states. Controller 420 includes a power source, such as a battery 425 for powering the controller and providing energy to apply voltage to the shutter 410 in a controlled manner. A user activatable switch 435, such as a touch sensitive layer, may also be included to toggle the shutter 410 between opaque and transparent states. A frame 435 may be included to support the shutter system 400 components and attach the frame 435 to a display to cover a camera lens via adhesive or other means for so attaching the frame 435 to the display.

In one embodiment, the controller 420 may include a wireless receiver or transceiver to receive control signals wirelessly, such also act to switch states of the shutter portion 410. As before, a trusted privacy module may be used to verify the origin of such wireless control signals.

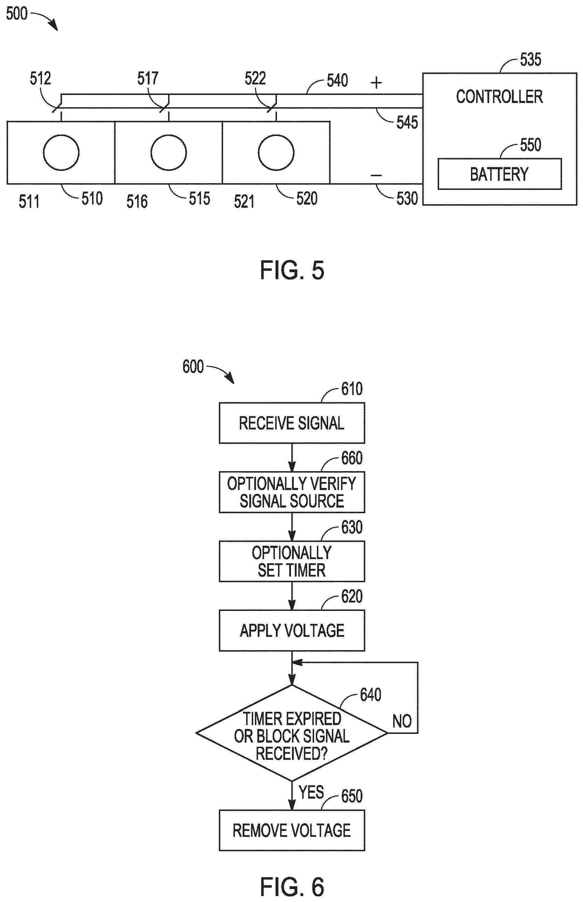

FIG. 5 is a block diagram of an alternative shutter system 500. In one embodiment, shutter system 500 includes multiple lateral shutter portions 510, 515, and 520, each positionable over respective lenses 511, 516, and 521. The shutter portions 510, 515, and 520 are each laterally electrically isolated from each other. Each portion is coupled to a first voltage rail 530, such as a negative rail coupled to a controller 535. Each portion is also coupleable to a second voltage rail 540 via respective switches 512, 517, and 522. Second voltage rail 540 is also coupled to controller 535. In various embodiments, the lenses may have different functions, such as wide angle or telephoto, or may be coupled to different types of cameras, such as infrared or regular RGB cameras. PDLC may be optimized to reflect infrared light in some embodiments.

Controller 535 controls the switches via one or more control lines indicated at 545. The controller 535 can thus control each switch independently and thus control each shutter portion 510, 515, and 520 to be opaque or transparent. The control may be performed in response to signals received by the controller 535 from either touch sensors associated with each shutter portion, or signals received from remote devices as previously described. If touch sensors are used, a user may slide a finger across the portions to control the shutters. Controller 535 may also include a power source, such as a battery 550, or may also or alternatively receive power from a device such as device 100.

FIG. 6 is flowchart illustrating a method 600 of controlling a shutter according to an example embodiment. Method 600 includes an operation 610 that receives an open shutter signal. In response to the open shutter signals, a voltage is applied at operation 620 across a first transparent conductive layer and a second transparent conductive layer forming a stack of layers covering a camera lens of a device, such that a polymer dispersed liquid crystal layer dispersed between the first and second conductive layers transitions from an opaque state to a transparent state.

At operation 630, a timer is set for a selected amount of time in response to receiving the open shutter signal. The timer counts down at decision operation 640 and at operation 650, the voltage is stopped or discontinued in response to the timer expiring or in response to a block signal being received.

In one embodiment, method 500 further optionally verifies at operation 660 that the open shutter signal is received from a trusted source via key based encryption. The open shutter signal may be received in response to user interaction with a touch sensitive layer of the stack of layers.

In a further embodiment, the open shutter signal is received for one or more lateral sections of the stack of layers covering one or more corresponding lenses such that each lens may be blocked from receiving light, or not blocked from receiving light independently.

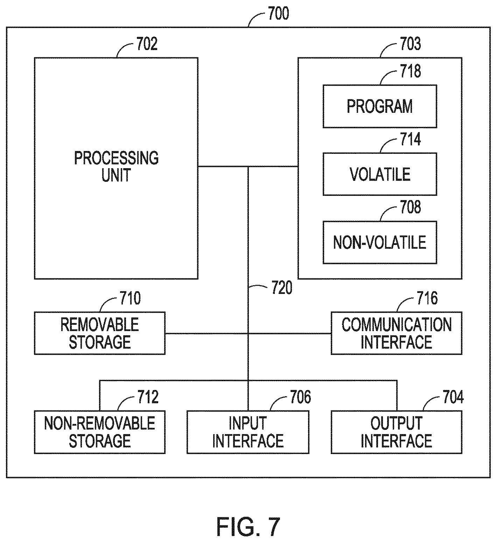

FIG. 7 is a block schematic diagram of a computer system 700 to implement one or more controllers and devices, as well as for performing methods and algorithms according to example embodiments. All components need not be used in various embodiments.

One example computing device in the form of a computer 700 may include a processing unit 702, memory 703, removable storage 710, and non-removable storage 712. Although the example computing device is illustrated and described as computer 700, the computing device may be in different forms in different embodiments. For example, the computing device may instead be a smartphone, a tablet, smartwatch, smart storage device (SSD), or other computing device including the same or similar elements as illustrated and described with regard to FIG. 7. Devices, such as smartphones, tablets, and smartwatches, are generally collectively referred to as mobile devices or user equipment.

Although the various data storage elements are illustrated as part of the computer 700, the storage may also or alternatively include cloud-based storage accessible via a network, such as the Internet or server-based storage. Note also that an SSD may include a processor on which the parser may be run, allowing transfer of parsed, filtered data through I/O channels between the SSD and main memory.

Memory 703 may include volatile memory 714 and non-volatile memory 708. Computer 700 may include - or have access to a computing environment that includes - a variety of computer-readable media, such as volatile memory 714 and non-volatile memory 708, removable storage 710 and non-removable storage 712. Computer storage includes random access memory (RAM), read only memory (ROM), erasable programmable read-only memory (EPROM) or electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 700 may include or have access to a computing environment that includes input interface 706, output interface 704, and a communication interface 716. Output interface 704 may include a display device, such as a touchscreen, that also may serve as an input device. The input interface 706 may include one or more of a touchscreen, touchpad, mouse, keyboard, microphone, camera, one or more device-specific buttons, one or more sensors integrated within or coupled via wired or wireless data connections to the computer 700, and other input devices. The computer may operate in a networked environment using a communication connection to connect to one or more remote computers, such as database servers. The remote computer may include a personal computer (PC), server, router, network PC, a peer device or other common data flow network switch, or the like. The communication connection may include a Local Area Network (LAN), a Wide Area Network (WAN), cellular, Wi-Fi, Bluetooth, or other networks. According to one embodiment, the various components of computer 700 are connected with a system bus 720.

Computer-readable instructions stored on a computer-readable medium are executable by the processing unit 702 of the computer 700, such as a program 718. The program 718 in some embodiments comprises software to implement one or more methods described herein. A hard drive, CD-ROM, and RAM are some examples of articles including a non-transitory computer-readable medium such as a storage device. The terms computer-readable medium, machine readable medium, and storage device do not include carrier waves to the extent carrier waves are deemed too transitory. Storage can also include networked storage, such as a storage area network (SAN). Computer program 718 along with the workspace manager 722 may be used to cause processing unit 702 to perform one or more methods or algorithms described herein.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

## Claims

1. A shutter system for providing controllable privacy, comprising:
a shutter (115, 300) supported over a camera lens of a device, the shutter configured to block light transmission in a first state and permit light transmission in a second state in response to a sufficient voltage being applied across the shutter; and
a controller (220, 310) coupled to the shutter to selectively apply the voltage,
**characterized in that**
the controller comprises a timer (225, 340) settable to a time during which the voltage is applied.

2. The shutter system of claim 1, further comprising a user activatable switch coupled to the controller (220, 310) to control application of the voltage, and
optionally wherein the user activatable switch comprises a sensor responsive to a user knock, and
optionally wherein the sensor comprises a microphone or vibration sensor.

3. The shutter system of any preceding claim, wherein the shutter (115, 300) comprises multiple lateral sections configured to cover multiple laterally spaced lenses wherein the controller (220, 310) is configured to apply the voltage selectively to each of the shutter multiple lateral sections, and
optionally further comprising user activated switches, each user activated switch coupled to a respective shutter multiple lateral section, and
optionally wherein each user activated switch comprises a touch sensitive area coupled to each respective shutter multiple lateral section.

4. The shutter system of claim 3, further comprising:
power conductors coupled to the controller and a power source of the device;
voltage lines coupled to the controller; and
control lines coupled to independently control the voltage lines to apply power to the shutter multiple lateral sections.

5. The shutter system of any preceding claim and further comprising a power source coupled to the controller (220, 310).

6. The shutter system of any preceding claim and further comprising:
a trusted privacy module coupled to the controller (220, 310) and configured to receive an input signal from a remote source requesting application of the voltage and verify the source of an input signal.

7. The shutter system of any preceding claim wherein the shutter comprises:
a first conductive layer;
a second conductive layer; and
a polymer dispersed liquid crystal layer dispersed between the first and second conductive layers, and
optionally wherein the shutter is supported over the camera lens by forming the layers directly over the lens.

8. The shutter system of any preceding claim wherein the shutter comprises a touch control surface coupled to receive user touch and provide signals representative of the user touch to the controller (220, 310).

9. The shutter system of any preceding claim and further comprising a frame coupled to the device for supporting the shutter over the camera lens.

10. A method (600) performed by the shutter system of any preceding claim, the method comprising:
receiving (610) an open shutter signal;
applying (620) a voltage across a first transparent conductive layer and a second transparent conductive layer forming a stack of layers covering a camera lens of a device, such that a polymer dispersed liquid crystal layer dispersed between the first and second conductive layers transitions from an opaque state to a transparent state;
the method being **characterized in that** it further comprises
setting (630) a timer for a selected amount of time in response to receiving the open shutter signal; and
stopping applying (650) the voltage in response to the timer expiring.

11. The method (600) of claim 10, further comprising verifying that the open shutter signal is received from a trusted source via key based encryption.

12. The method (600) of any of claims 10 to 11 wherein the open shutter signal is received in response to user interaction with a touch sensitive layer of the stack of layers.

## Patentansprüche

1. Verschlusssystem zum Bereitstellen steuerbarer Privatsphäre, umfassend:
einen Verschluss (115, 300), der über einem Kameraobjektiv einer Vorrichtung angebracht ist, wobei der Verschluss konfiguriert ist, um in einem ersten Zustand eine Lichtdurchlässigkeit zu blockieren und in einem zweiten Zustand die Lichtdurchlässigkeit zuzulassen, wenn an den Verschluss eine ausreichende Spannung angelegt wird; und
eine Steuerung (220, 310), die mit dem Verschluss gekoppelt ist, um die Spannung wahlweise anzulegen,
**dadurch gekennzeichnet, dass**
die Steuerung einen Zeitgeber (225, 340) umfasst, der auf eine Zeit einstellbar ist, während der die Spannung angewendet ist.

2. Verschlusssystem nach Anspruch 1, ferner umfassend einen benutzeraktivierbaren Schalter, der mit der Steuerung (220, 310) gekoppelt ist, um die Anwendung der Spannung zu steuern, und
wobei der benutzeraktivierbare Schalter optional einen Sensor umfasst, der auf ein Klopfen des Benutzers reagiert, und
wobei der Sensor optional ein Mikrofon oder einen Vibrationssensor umfasst.

3. Verschlusssystem nach einem der vorstehenden Ansprüche, wobei der Verschluss (115, 300) mehrere seitliche Abschnitte umfasst, die konfiguriert sind, um mehrere seitlich beabstandete Objektive abzudecken, wobei die Steuerung (220, 310) konfiguriert ist, um die Spannung an jeden der mehreren seitlichen Verschlussabschnitte wahlweise anzuwenden, und
optional ferner umfassend benutzeraktivierte Schalter, wobei jeder benutzeraktivierte Schalter mit einem entsprechenden der mehreren seitlichen Verschlussabschnitte gekoppelt ist, und
wobei optional jeder benutzeraktivierte Schalter einen berührungsempfindlichen Bereich umfasst, der mit jedem jeweiligen der mehreren seitlichen Verschlussabschnitte gekoppelt ist.

4. Verschlusssystem nach Anspruch 3, ferner umfassend:
Stromleiter, die mit der Steuerung und einer Stromquelle der Vorrichtung gekoppelt sind;
Spannungsleitungen, die mit der Steuerung gekoppelt sind; und
Steuerleitungen, die gekoppelt sind, um die Spannungsleitungen unabhängig voneinander zu steuern, um Strom an die mehreren seitlichen Verschlussabschnitte anzuwenden.

5. Verschlusssystem nach einem der vorstehenden Ansprüche, ferner umfassend eine an die Steuerung (220, 310) gekoppelte Stromquelle.

6. Verschlusssystem nach einem der vorstehenden Ansprüche und ferner umfassend:
ein vertrauenswürdiges Privatsphäremodul, das mit der Steuerung (220, 310) gekoppelt und konfiguriert ist, um ein Eingangssignal von einer entfernten Quelle zu empfangen, das die Anwendung der Spannung anfordert, und die Quelle eines Eingangssignals überprüft.

7. Verschlusssystem nach einem der vorstehenden Ansprüche, wobei der Verschluss umfasst:
eine erste leitfähige Schicht;
eine zweite leitfähige Schicht; und
eine polymerdispergierte Flüssigkristallschicht, die zwischen der ersten und der zweiten leitfähigen Schicht dispergiert ist, und
wobei der Verschluss optional über dem Kameraobjektiv getragen wird, indem die Schichten direkt über dem Objektiv ausgebildet werden.

8. Verschlusssystem nach einem der vorstehenden Ansprüche, wobei der Verschluss eine Berührungssteuerungsoberfläche umfasst, die gekoppelt ist, um eine Benutzerberührung zu empfangen und Signale, die die Benutzerberührung darstellen, an die Steuerung (220, 310) bereitzustellen.

9. Verschlusssystem nach einem der vorstehenden Ansprüche, ferner umfassend einen mit der Vorrichtung gekoppelten Rahmen zum Tragen des Verschlusses über dem Kameraobjektiv.

10. Verfahren (600), das von dem Verschlusssystem eines der vorstehenden Ansprüche ausgeführt wird, das Verfahren umfassend:
Empfangen (610) eines Signals zum Öffnen des Verschlusses;
Anlegen (620) einer Spannung über eine erste transparente leitfähige Schicht und eine zweite transparente leitfähige Schicht, die einen Schichtstapel ausbilden, der ein Kameraobjektiv einer Vorrichtung derart bedeckt, dass eine zwischen der ersten und zweiten leitfähigen Schicht verteilte, in einem Polymer dispergierte Flüssigkristallschicht von einem undurchsichtigen in einen transparenten Zustand übergeht;
wobei die Methode **dadurch gekennzeichnet ist, dass** sie ferner das Einstellen (630) eines Zeitgebers auf eine ausgewählte Zeitspanne als eine Reaktion auf ein Empfangen des Signals zum Öffnen des Verschlusses umfasst; und
Beenden des Anwendens (650) der Spannung als Reaktion auf das Ablaufen des Zeitgebers.

11. Verfahren (600) nach Anspruch 10, ferner umfassend ein Verifizieren, dass das Signal zum Öffnen des Verschlusses über eine schlüsselbasierte Verschlüsselung von einer vertrauenswürdigen Quelle empfangen wurde.

12. Verfahren (600) nach einem der Ansprüche 10 bis 11, wobei das Signal zum Öffnen des Verschlusses als Reaktion auf eine Benutzerinteraktion mit einer berührungsempfindlichen Schicht des Schichtstapels empfangen wird.

## Revendications

1. Système d'obturateur permettant de fournir une confidentialité pouvant être commandée, comprenant :
un obturateur (115, 300) supporté sur un objectif de caméra d'un dispositif, l'obturateur étant configuré pour bloquer la transmission de lumière dans un premier état et permettre une transmission de lumière dans un second état en réponse à une tension suffisante étant appliquée sur l'obturateur ; et
un dispositif de commande (220, 310) couplé à l'obturateur pour appliquer sélectivement la tension,
**caractérisé en ce que**
le dispositif de commande comprend une minuterie (225, 340) qui peut être réglée sur une durée pendant laquelle la tension est appliquée.

2. Système d'obturateur selon la revendication 1, comprenant en outre un interrupteur activable par l'utilisateur couplé au dispositif de commande (220, 310) pour commander l'application de la tension, et
éventuellement dans lequel l'interrupteur activable par l'utilisateur comprend un capteur sensible à une frappe de l'utilisateur, et
éventuellement dans lequel le capteur comprend un microphone ou un capteur de vibrations.

3. Système d'obturateur selon l'une quelconque revendication précédente, dans lequel l'obturateur (115, 300) comprend de multiples sections latérales conçues pour recouvrir de multiples lentilles espacées latéralement, dans lequel le dispositif de commande (220, 310) est configuré pour appliquer la tension sélectivement à chacune des multiples sections latérales d'obturateur, et
éventuellement comprenant en outre des interrupteurs activés par l'utilisateur, chaque interrupteur activé par l'utilisateur étant couplé à une section latérale multiple d'obturateur, et
éventuellement dans lequel chaque interrupteur activé par l'utilisateur comprend une zone sensible au contact couplée à chaque section latérale multiple d'obturateur.

4. Système d'obturateur selon la revendication 3, comprenant en outre :
des conducteurs d'alimentation couplés au dispositif de commande et à une source d'alimentation du dispositif ;
des lignes de tension couplées au dispositif de commande ; et
des lignes de commande couplées pour commander indépendamment les lignes de tension afin d'alimenter les multiples sections latérales d'obturateur.

5. Système d'obturateur selon l'une quelconque revendication précédente et comprenant en outre une source d'alimentation couplée au dispositif de commande (220, 310).

6. Système d'obturateur selon l'une quelconque revendication précédente et comprenant en outre :
un module de confidentialité de confiance couplé au dispositif de commande (220, 310) et configuré pour recevoir un signal d'entrée à partir d'une source à distance demandant l'application de la tension et vérifier la source d'un signal d'entrée.

7. Système d'obturateur selon l'une quelconque revendication précédente dans lequel l'obturateur comprend :
une première couche conductrice ;
une seconde couche conductrice ; et
une couche de cristaux liquides dispersés dans un polymère dispersée entre les première et seconde couches conductrices, et
éventuellement, dans lequel l'obturateur est supporté sur l'objectif de caméra en formant les couches directement sur l'objectif.

8. Système d'obturateur selon l'une quelconque revendication précédente dans lequel l'obturateur comprend une surface de commande tactile couplée pour recevoir le contact de l'utilisateur et fournir des signaux représentants le contact de l'utilisateur sur le dispositif de commande (220, 310).

9. Système d'obturateur selon l'une quelconque revendication précédente comprenant en outre un cadre accouplé au dispositif pour supporter l'obturateur sur l'objectif de caméra.

10. Procédé (600) réalisé par le système d'obturateur selon l'une quelconque revendication précédente, le procédé comprenant :
la réception (610) d'un signal d'ouverture d'obturateur ;
l'application (620) d'une tension sur une première couche conductrice transparente et une seconde couche conductrice transparente formant une pile de couches recouvrant un objectif de caméra d'un dispositif, de telle sorte qu'une couche de cristaux liquides dispersés dans un polymère dispersée entre les première seconde couches conductrices effectue une transition d'un état opaque à un état transparent ;
le procédé étant **caractérisé en ce qu'**il comprend en outre le réglage (630) d'une minuterie pour une durée de temps sélectionnée en réponse à la réception du signal d'ouverture d'obturateur ; et
l'arrêt de l'application (650) de la tension en réponse à l'expiration de la minuterie.

11. Procédé (600) selon la revendication 10, comprenant en outre le fait de vérifier que le signal d'ouverture d'obturateur est reçu à partir d'une source fiable par le biais d'un chiffrage basé sur une clé.

12. Procédé (600) selon l'une quelconque des revendications 10 à 11, dans lequel le signal d'ouverture d'obturateur est reçu en réponse à une interaction de l'utilisateur avec une couche sensible au contact de la pile de couches.
